# EUROPÄISCHE PATENTSCHRIFT

(11) **EP 1 655 498 B1**
(45) Veröffentlichungstag und Bekanntmachung des Hinweises auf die Patenterteilung: **14.11.2007**
(21) Anmeldenummer: 05108830.0
(22) Anmeldetag: 26.09.2005
(51) Int. Cl.: F16B 25/00, F16B 33/06

(54) **Gewindefurchende Schraube sowie Verfahren zum Herstellen derselben**
Self-tapping screw and method of its manufacture
Vis autotaraudeuse et procédé pour sa fabrication

(30) Priorität: 08.11.2004 DE 102004053803
(43) Veröffentlichungstag der Anmeldung: 10.05.2006
(73) Patentinhaber: HILTI Aktiengesellschaft, 9494 Schaan (LI)
(72) Erfinder: Wieser, Jürgen, 86916, Kaufering (DE); Lennartsson, Johan, 21749 Malmö (SE); Hohmeier, Pierre, 6800, Feldkirch (AT); Huber, Franz, 86865, Markt Wald (DE)
(74) Vertreter: Wildi, Roland

(56) Entgegenhaltungen:
- WO-A-20/04074697
- DE-A1- 4 419 988
- DE-A1- 19 815 670
- DE-A1- 19 852 338
- US-A- 6 086 302

## Beschreibung

### Technisches Gebiet

Die Erfindung betrifft eine gewindefurchende Schraube, insbesondere gewindefurchende Schraube aus einem korrosionsbeständigen Metall, der im Oberbegriff des Patentanspruchs 1 genannten Art, sowie ein Verfahren zur Herstellung derselben. Eine derartige Schraube ist aus der WO 2004/074697 A1 bekannt.

### Stand der Technik

Derartige Schrauben weisen einen Schaft auf, der wenigstens bereichsweise mit einem Aussengewinde versehen ist und der an einem Ende einen Kopf als Lastangriffsmittel aufweist. Bei gewindefurchenden beziehungsweise gewindeschneidenden Schrauben besitzt das Aussengewinde eine hohe Festigkeit, die es erlaubt, ein Muttergewinde in den Untergrund zu furchen. Zumindest der Stahl des Aussengewindes ist dazu gehärtet. Für Aussenanwendungen werden auch Schrauben, wie Betonschrauben, aus korrosionsbeständigen Stahlwerkstoffen hergestellt. Derartige Werkstoffe lassen sich normalerweise nicht durch eine Wärmebehandlung soweit in der Festigkeit steigern, dass ein sicheres Einfurchen in den Beton möglich ist.

Aus der DE 198 15 670 A1 ist eine gewindeformende Schraube aus korrosionsbeständigem Stahl bekannt, die teilweise ausscheidungsgehärtet ist. Von Nachteil ist hierbei, dass die maximal erreichbaren Härtewerte für einen Einsatz der Schrauben in harten mineralischen Untergründen, wie z. B. Beton nicht ausreichen.

Aus der WO 94/25764 A1 ist es ferner bekannt, eine gewindeformende Schraube aus korrosionsbeständigem Stahl in einem Ionen-Nitrierverfahren mit einer ganzflächigen Beschichtung zu versehen. Von Nachteil ist es dabei jedoch, dass die Schichtdicke der Beschichtung bei maximal 0,2 mm liegt. Bei der Anwendung einer derartigen Schraube in harten mineralischen Untergründen ist diese Beschichtung bereits nach wenigen Drehungen der Schraube abgerieben.

Aus der DE 198 52 338 A1 ist eine Schraube aus rostfreiem Stahl bekannt, dessen Gewinde mit Aufnahmebohrungen zur Aufnahme von Schneideinsatz-Stiften aus gehärtetem Stahl vorgesehen ist, die das Einschneiden in einen harten, mineralischen Untergrund ermöglichen. Nachteilig an der bekannten Lösung ist, dass die Fertigung dieser Schraube sehr aufwendig ist, da die Vielzahl von Schneideinsatz-Stiften einzeln in die Aufnahmebohrungen eingeschlagen werden müssen. An beiden Enden der Schneideinsatz-Stifte ist jeweils ein Schneidkopf vorgesehen, damit die Schneideinsatz-Stifte in beide Richtungen in die Aufnahmebohrungen geschlagen werden können. Nach dem Einschlagen der Schneideinsatz-Stifte in die Aufnahmebohrungen müssen die überstehenden Schneidköpfe abgeschliffen werden. Die Schneideinsatz-Stifte sind in radialer Richtung nur mittels Reibschluss in den Aufnahmebohrungen gehalten.

Aus der WO 2004/074697 A1 ist eine gewindefurchende Schraube bekannt, die einen Schaft mit einem Kohlenstoffgehalt zwischen 0 Gew.-% (Gewichtsprozent) und 0.5 Gew.-% aufweist, an dem ein einstückig mit dem Schaft ausgebildetes Gewinde angeordnet ist. Mindestens ein als Schweisskörper aus einem Metall ausgebildetes Schneidelement mit einem Kohlenstoffgehalt von mehr als 0.8 Gew.-% ist fest mit dem Schaft verbunden im Gewinde angeordnet. Die Schweisskörper sind aus einem Schnellarbeitsstahl gefertigt und werden in das Gewinde eingeschweisst. Nachteilig an der bekannten Lösung ist, dass die einzelnen Schweisskörper aufwändig in das Gewinde eingeschweisst werden müssen. Zudem weisen Stähle mit einem Kohlenstoffgehalt von mehr als 0.8 Gew.-%, so genannte übereutektodische Stähle, eine schlechte Schweissbarkeit auf, so dass zur Festlegung der Schneidkörper im Gewinde ein nicht unwesentlicher Bereich des Gewindes und des Kerns beim Anschweissvorgang aufgeweicht wird, was zu einer Rissbildung in diesem Bereich führen kann.

### Darstellung der Erfindung

Aufgabe der Erfindung ist es daher, eine gewindefurchende Schraube zu schaffen, die die genannten Nachteile vermeidet und die ein Gewindeschneiden auch in harten Untergründen, wie Beton, erlaubt.

Die Aufgabe ist durch die Merkmale des unabhängigen Anspruchs gelöst. Vorteilhafte Weiterbildungen sind in den Unteransprüchen dargelegt.

Gemäss der Erfindung weist eine gewindefurchende Schraube, insbesondere eine gewindefurchende Schraube aus einem korrosionsbeständigen Metall, einen Schaft und zumindest ein wenigstens bereichsweise umfänglich an diesem angeordnetes Gewinde auf. An dem Gewinde sind mehrere Schneidmittel in Aussparungen im Gewinde angeordnet, deren Härte grösser als die Härte des Gewindes ist. Die Schneidmittel sind als in den Aussparungen angeordnetes Schweissgut ausgebildet.

In die vorgängig ausgebildeten Aussparungen kann Schweissgut mit einem geringen, für die Schneidhaltigkeit ausreichenden Kohlenstoffgehalt in das Gewinde eingebracht werden, was zu einer besseren Schweissung und geringeren Spannungen zwischen dem Grundwerkstoff der Schraube und der Aufschweissung führt. Durch die reduzierte Wärmebeanspruchung des Grundwerkstoffs beim Einbringen des Schweissguts bleibt beispielsweise die Korrosionsbeständigkeit des Grundwerkstoffs weitgehend erhalten. Es können feinere beziehungsweise präzisere Profilgeometrien mit definierten Geometrien erzeugt werden, was ein vorteilhaftes Einschneidverhalten in einem mineralischen Untergrund, wie z. B. in Beton bewirkt. Zudem können aufwändige, mechanische Nachbearbeitungen der erzeugten Schneidmittel entfallen. Die erzeugten Schneidmittel können das Gewinde harmonisch fortsetzen oder radial über dieses vorstehen. Bei der Anordnung von mehreren Schneidmitteln entlang des Gewindeverlaufs stehen beispielsweise die dem setzungsrichtungsseitigen Ende zugewandten Schneidmittel radial vor und die nachfolgenden Schneidmittel nehmen in deren radialen Erstreckung kontinuierlich ab, bis deren radiale Erstreckung der radialen Erstreckung des Gewindes entspricht. In einer vorteilhaften Ausführung der erfindungsgemässen, gewindefurchenden Schraube sind nur in einem Bereich ausgehend von dem setzungsrichtungsseitigen Ende vier bis 15 Schneidmittel beabstandet zueinander im Gewinde vorgesehen

Vorzugsweise weist das Schweissgut einen Kohlenstoffgehalt von weniger als 0.8 Gew.-% (Gewichtsprozent) auf, was die Schweissbarkeit verbessert und somit eine einfach herstellbare und ausreichende Verbindung zwischen dem Schweissgut und dem Grundwerkstoff der Schraube schafft. Infolge der Anordnung des Schweissguts in den Aussparungen resultiert nur eine geringe Aufschmelzung des Grundwerkstoffs der Schraube. Damit wird im Endzustand bei einer mit den bekannten Profilgeometrie eine höhere Härte und somit eine bessere Schneidhaltigkeit erreicht, als dies bei der Verwendung eines Schweisszusatz mit einem hohen Kohlenstoffgehalt erreicht wird, der nicht in Aussparungen angeordnet ist. Die Spannungen zwischen dem Grundwerkstoff und den eingebrachten Schneidmitteln werden mit einem, einen geringen Kohlenstoffgehalt aufweisenden Schweissgut wesentlich reduziert.

Bevorzugt sind die Aussparungen zur Aufnahme des Schweissguts als Punktaussparungen ausgebildet, welche eine Erstreckung in Richtung des Gewindeverlaufs aufweisen, die höchstens der zweifachen radialen Erstreckung des Gewindes entspricht. Somit steht im Verhältnis der eingebrachten Menge des Schweissguts eine ausreichende Kontaktfläche zur Festlegung desselben an dem Gewinde der Schraube zur Verfügung, womit nur eine geringe Aufschmelzung des Grundwerkstoffs der Schraube erfolgt.

In einer alternativen Ausführungsform der erfindungsgemässen Schraube sind die Aussparungen zur Aufnahme des Schweissguts als Linienaussparungen ausgebildet, welche eine minimale Erstreckung in Richtung des Gewindeverlaufs aufweisen, die mindestens der zweifachen radialen Erstreckung des Gewindes entspricht. Somit können auch Schneidmittel erstellt werden, die eine grosse Wirkfläche zum Untergrund beim Setzen der Schraube aufweisen. Auch bei dieser Ausführung steht im Verhältnis der eingebrachten Menge des Schweissguts eine ausreichende Kontaktfläche zur Festlegung desselben an dem Gewinde der Schraube zur Verfügung und es erfolgt nur eine geringe Aufschmelzung des Grundwerkstoffs der Schraube.

Bevorzugt weisen die Aussparungen einen Bodenabschnitt auf, der radial zum äusseren Umfang des Schafts beabstandet ist. Der Bodenabschnitt der Aussparung ist vorteilhaft derart zum äusseren Umfang des Schafts beabstandet, dass beim Einbringen des Schweissguts nur Material des an dem Schaft angeordneten Gewindes aufgeschmolzen wird und somit der Schaft an sich höchstens geringfügig einer Wärmebeanspruchung ausgesetzt wird. Die Korrosionsbeständigkeit des Schafts der Schraube bleibt weitgehend erhalten.

Vorzugsweise vergrössern sich die Abstände der Aussparungen zueinander ausgehend vom setzungsrichtungsseitigen Ende des Schafts entlang des Gewindeverlaufs. Im vorderen Bereich des Gewindes, der beim Setzen der gewindefurchenden Schraube zuerst mit dem Untergrund in Anlage kommt, sind vorteilhaft die Schneidmittel nah bei einander angeordnet. In einem dem setzungsrichtungsseitigen Ende abgewandten Abschnitt können die Schneidmittel weiter voneinander beabstandet sein, da diese Schneidmittel im Wesentlichen nur eine nachfurchende Wirkung aufweisen und lediglich einem vorteilhaften Setzvorgang der Schraube in den Untergrund dienen.

Bevorzugt ist ein Positioniermittel in den Aussparungen zur Positionierung der Schneidmittel in den Aussparungen vorgesehen. Das Positioniermittel ist adhäsionsfördernd ausgebildet und ist entsprechend der gewünschten Position der Schneidmittel in dem Bodenabschnitt und/oder an einer Wandung der Aussparungen vorgesehen. Das Schweissgut wird während der Herstellung der Schneidmittel durch das Positioniermittel in der gewünschten Lage in den Aussparungen gehalten und wirkt bei der Ausbildung der Gestalt der Schneidmittel unterstützend. Beispielsweise weisen die ausgeformten Schneidmittel eine ovaloide oder tropfenförmige Gestalt auf. Vorteilhaft überragen die genau definierten Schneidmittel radial und/oder axial die Aussenseiten des Gewindes, wodurch der Gewindefurchprozess verbessert wird.

Das Positioniermittel verhindert ein unerwünschtes Abwandern des Schweissgutes z. B. an die Wandungen der Aussparung. In einer vorteilhaften Ausführung ist das Positioniermittel als ein Vorsprung ausgebildet, welcher beispielsweise beim Ausbilden der Aussparung im Gewinde mittels einer Fräseinrichtung ausgebildet wird. Alternativ dient eine Depression, wie beispielsweise eine Furche in der Aussparung als Positioniermittel zur Positionierung der Schneidmittel in der Aussparung. Des Weiteren kann zur Ausbildung des Positioniermittels ein Abschnitt der Aussparung aufgerauht, mit einer Riffelung oder Rändelung versehen sein. Neben einer mechanischen Bearbeitung der Aussparung ist auch der Einsatz einer chemischen Lösung denkbar, welche beispielsweise durch eine ätzende Wirkung Material der Aussparung entfernt und so ein Positioniermittel für das Schweissgut ausformt.

Vorzugsweise weisen die Aussparungen Wandungen auf, wobei die Schneidmittel zu zumindest einer der Wandungen beabstandet angeordnet sind. Damit werden definierte Freiräume für abgetragenes Material bereitgestellt, was zu einem verbesserten Gewindefurchprozess und somit zu einem erleichterten Setzverhalten der erfindungsgemässen Schraube führt. In einer vorteilhaften Ausführungsform der Schraube sind die Schneidmittel lediglich an dem Bodenabschnitt der Aussparung angeordnet und zu beiden seitlichen Wandungen der Aussparung beabstandet angeordnet. Diese freistehende Anordnung der Schneidmittel in der Aussparung z. B. in Kombination mit einer ovaloiden Ausgestaltung der Schneidmittel führt zu einem vorteilhaften Einschneidverhalten beziehungsweise Gewindefurchprozess und somit einem verbesserten Setzverhalten. Dadurch senkt sich einerseits die Setzzeit bei einer Schraube und andererseits muss ein geringeres Drehmoment gegenüber den herkömmlichen gewindefurchenden Schrauben zum Setzen der Schraube aufgebracht werden, was wesentlich zur Wirtschaftlichkeit der erfindungsgemässen Schraube beiträgt.

Zum Herstellen einer erfindungsgemässen Schraube wird zunächst zumindest ein Gewinde wenigstens bereichsweise umfänglich an einem Schaft angeordnet, Anschliessend werden in dem Gewinde je nach Anforderungen punkt- oder linienförmige Aussparungen ausgenommen, in denen Schweissgut als Schneidmittel angeordnet wird.

Vorzugsweise wird das Schweissgut in das Gewinde mittels Laserschweissen eingeschweisst, was eine einfache und kostengünstige Herstellung der erfindungsgemässen Schraube erlaubt. Durch das Laserschweissen entstehen geringere Wärmeeinflusszonen als bei anderen Schweissverfahren, wodurch der für die Korrosionsbeständigkeit wichtige Aufschmelzgrad des Kern- und/oder Gewindematerials minimiert wird. Des Weiteren wird mit dem Laserschweissen auch die Härteaufmischung zwischen dem Kernmaterial und dem Schweissgut reduziert, so dass die aufgrund des gewählten Schweissgutes resultierende Härte des Schneidmittels weitgehend erhalten bleibt.

Das Schneidmittel wird durch ein definiertes Schweissprogramm erzeugt, womit die Form und Lage des Schneidmittels in der Aussparung einfach ausgestaltet werden kann. Die eingeschweissten Schneidmittel benötigen keine weitere Nachbearbeitung z. B. durch Schleifen, so dass die Randhärte der Randschicht beibehalten wird und für den Gewindefurchprozess zur Verfügung steht. Des Weiteren sinkt der Fertigungsaufwand für die Herstellung der erfindungsgemässen Schraube, was sich vorteilhaft auf die Herstellungskosten derselben auswirkt.

Beispielsweise wird zur Schaffung eines ersten Schweisspunktes am Bodenabschnitt der Aussparung z. B. im Bereich des Positioniermittels zur Positionierung des Schneidmittels ein Schweissbad erzeugt, anschliessend Schweissgut hinzugefügt und dieses leicht abgekühlt. Während der Aufwärtsbewegung des Laserschweisskopfes wird erneut Schweissgut zugeführt und somit ein zweiter Schweisspunkt auf den noch nicht erstarrten ersten Schweisspunkt aufgesetzt. Mit diesem Verfahren wird die Aufmischung zwischen dem Schneidmittel und dem Kernmaterial der Schraube massgeblich reduziert, so dass eine ausreichende Härte des Schneidmittels bei Beibehaltung der Korrosionsbeständigkeit der Schraube gegeben ist.

In einer alternativen Ausführungsform der Schraube wird das Schweissgut auflegiert. Insbesondere bei einer Ausgestaltung der Aussparungen, bei der die Bodenabschnitte der Aussparungen nicht in den Kern einreichen, können bei Gewährleistung der Korrosionsbeständigkeit des Schafts die Wandungen der Aussparungen lokal beziehungsweise zonar aufgeschmolzen werden. Zusätzlich können Legierungsstoffe wie z. B. härtbare Stähle, Kohlenstoff oder übliche, zur Hartmetallbildung verwendete Legierungspulver zugegeben werden, womit eine grössere Härte und somit eine hohe Schneidhaltigkeit erreicht wird.

Aus der nachfolgenden Detailbeschreibung und der Gesamtheit der Patentansprüche ergeben sich weitere vorteilhafte Ausführungsformen und Merkmalskombinationen der Erfindung.

Kurze Beschreibung der Zeichnungen

Die Erfindung wird nachstehend anhand zweier Ausführungsbeispiele näher erläutert. Es zeigen:
- Fig. 1: Eine Längsseitenansicht einer erfindungsgemässen gewindefurchenden Schraube;
- Fig. 2: einen Querschnitt entlang der Linie II-II in Fig. 1;
- Fig. 3: eine Variante der erfindungsgemässen gewindefurchenden Schraube im Querschnitt;
- Fig. 4: einen Detailausschnitt eines Querschnitts einer erfindungsgemässen gewindefurchenden Schraube mit einer Variante der Ausgestaltung des in einer Aussparung angeordneten Schneidmittels; und
- Fig. 5: einen Detailausschnitt eines Querschnitts einer erfindungsgemässen gewindefurchenden Schraube mit einer weiteren Variante der Ausgestaltung des in einer Aussparung angeordneten Schneidmittels.

Grundsätzlich sind in den Figuren gleiche Teile mit den gleichen Bezugszeichen versehen.

### Wege zur Ausführung der Erfindung

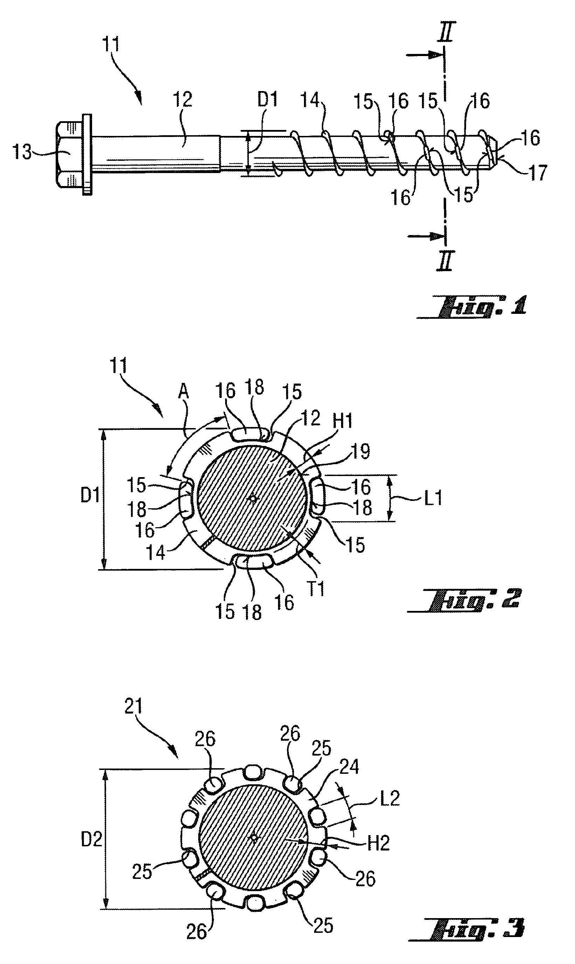

Die in den Figuren 1 und 2 dargestellte korrosionsbeständige, gewindefurchende Schraube 11, aus einem Grundwerkstoff mit einem Kohlenstoffgehalt von weniger als 0.5 Gew.-%, beispielsweise mit einem Kohlenstoffgehalt von 0.1 Gew.-%, weist einen Schaft 12, einen an einem Ende des Schafts 12 angeordneten Schraubenkopf 13 und ein bereichsweise am Umfang des Schafts 12 angeordnetes Gewinde 14. An dem Gewinde 14 sind mehrere Aussparungen 15 als Linienaussparungen ausgebildet, in denen Schweissgut als Schneidmittel 16 auflegiert ist. Das Schweissgut weist einen Kohlenstoffgehalt von weniger als 0.8 Gew.-%, beispielsweise einen Kohlenstoffgehalt von 0.7 Gew.-% auf. Der Winkelabstand A der Aussparungen 15 und somit der Schneidmittel 16 zueinander entlang des Verlaufs des Gewindes 14 vergrössert sich vom setzungsrichtungsseitigen Ende 17 des Schafts 12. Die Aussparungen 15 weisen eine Erstreckung L1 in Richtung des Verlaufs des Gewindes 14 auf, welcher der dreifachen radialen Erstreckung H1 des Gewindes 14 entspricht. Die Aussparungen 15 weisen zudem in radialer Richtung zum Schaft 12 eine Tiefe T1 auf, deren Betrag kleiner als der Betrag der radialen Erstreckung H1 des Gewindes 14 ist, so dass der Bodenabschnitt 18 der Aussparung 15 zum äusseren Umfang 19 des Schafts 12 beabstandet ist. Die Schneidmittel 16 reichen in ihrer radialen Erstreckung bis zum äusseren Umfang beziehungsweise Aussendurchmesser D1 des Gewindes 14.

Durch die Anordnung des Schweissguts in den Aussparungen 15 und die Herstellung der Schraube 11 weisen die erzeugten Schneidmittel 16 eine Härte grösser als 600 HV auf, während die Schraube 11 an sich eine Härte von 150 HV bis 400 HV aufweist. Somit ist eine ausreichende Schneidhaltigkeit der Schraube 11 auch beim Setzen derselben beispielsweise in einem Beton gewährleistet.

Die in Figur 3 einzig im Schnitt dargestellte Schraube 21 weist wie die Schraube 11 gemäss den Figuren 1 und 2 ebenfalls Aussparungen 25 zur Aufnahme des als Schneidmittel 26 dienenden Schweissguts auf, wobei die Aussparungen 25 bei dieser Ausführungsform als Punktaussparungen ausgebildet sind und das Schweissgut ist in den Aussparungen 25 eingeschweisst ist. Die Schneidmittel 26 reichen in ihrer radialen Erstreckung über den äusseren Umfang beziehungsweise Aussendurchmesser D2 des Gewindes 24 hinaus und stehen über das Gewinde 24 vor. Die Aussparungen 25 weisen eine Erstreckung L2 in Richtung des Verlaufs des Gewindes 24 auf, welcher der radialen Erstreckung H2 des Gewindes 24 entspricht.

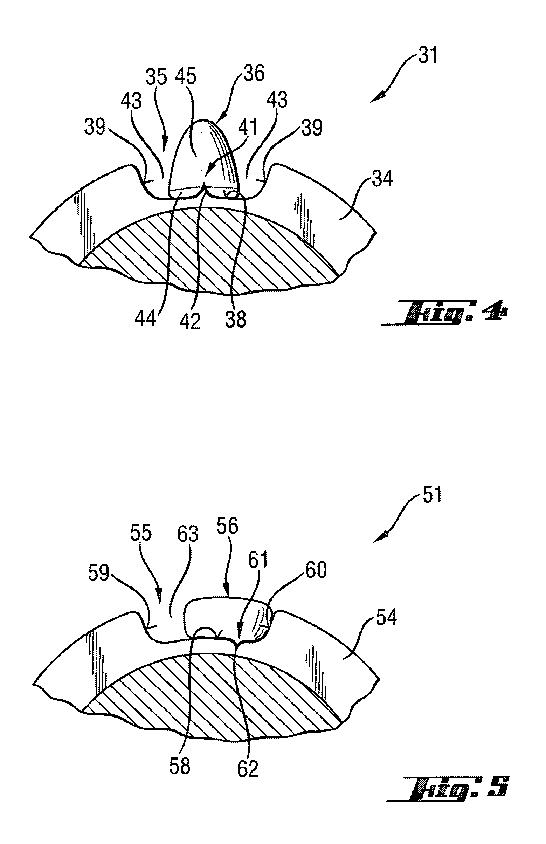

In dem Detailausschnitt eines Querschnitts durch die Schraube 31 gem. der Fig. 4 ist ein ovaloidenförmiges Schneidmittel 36 dargestellt, das in der Aussparung 35 des Gewindes 34 mittels Laserschweissen ausgebildet ist. Zur Positionierung des aus Schweissgut gebildeten Schneidmittels 36 in der Aussparung 35 ist am Bodenabschnitt 38 ein als Positioniermittel 41 ausgebildeter Vorsprung 42 vorgesehen. Zur Schaffung zweier Freiräume 43 für abgetragenes Material ist das Schneidmittel 36 beabstandet zu den Wandungen 39 angeordnet.

Zur Herstellung der erfindungsgemässen gewindefurchenden Schraube 31 werden beispielsweise mittels eines Fräswerkzeugs die Aussparungen 35 im Gewinde 34 erstellt, wobei gleichzeitig der Vorsprung 42 ausgebildet wird. Anschliessend wird mit einem Laserschweissgerät ein Schweissbad erzeugt und Schweissgut zugeführt, wobei durch leichtes Abkühlen ein erster Schweisspunkt 44 erzeugt wird. Während der Aufwärtsbewegung des Schweisskopfes wird erneut Schweissgut zugeführt, wobei ein zweiter Schweisspunkt 45 auf den noch nicht erstarrten ersten Schweisspunkt 44 aufgesetzt wird.

In Fig. 5 ist eine weitere Variante einer erfindungsgemässen gewindefurchenden Schraube 51 im Detailausschnitt gezeigt. Am Bodenabschnitt 58 der im Gewinde 54 angeordneten Aussparung 55 ist als Positioniermittel 61 eine Furche 62 vorgesehen, welche oberflächenvergrössernd wirkt und bei der Anordnung des Schneidmittels 56 in der Aussparung 55 dieses in der gewünschten Position hält. Das Schneidmittel 56 ist in dieser Ausführung mit der Wandung 60 anliegend und zur Schaffung eines Freiraums 63 zu der Wandung 59 beabstandet zu dieser angeordnet.

## Patentansprüche

1. Gewindefurchende Schraube (11; 21; 31; 51), insbesondere gewindefurchende Schraube aus einem korrosionsbeständigen Metall, mit einem Schaft (12) und zumindest einem wenigstens bereichsweise umfänglich an diesem angeordneten Gewinde (14; 24; 34; 54), wobei an dem Gewinde (14; 24: 34; 54) mehrere Schneidmittel (16; 26; 36; 56) in Aussparungen (15; 25; 35; 55) im Gewinde (14; 24; 34; 54) angeordnet sind, deren Härte grösser als die Härte des Gewindes (14; 24; 34; 54) ist, **dadurch gekennzeichnet, dass** die Schneidmittel (16; 26; 36; 56) als in den Aussparungen (15; 25; 35; 55) angeordnetes Schweissgut ausgebildet sind.

2. Schraube nach Anspruch 1, **dadurch gekennzeichnet, dass** das Schweissgut einen Kohlenstoffgehalt von weniger als 0.8 Gew.-% aufweist.

3. Schraube nach Anspruch 1 oder 2, **dadurch gekennzeichnet, dass** die Aussparungen (25) zur Aufnahme des Schweissguts als Punktaussparungen ausgebildet sind.

4. Schraube nach Anspruch 1 oder 2, **dadurch gekennzeichnet, dass** die Aussparungen (15; 35; 55) zur Aufnahme des Schweissguts als Linienaussparungen ausgebildet sind.

5. Schraube nach einem der Ansprüche 1 bis 4, **dadurch gekennzeichnet, dass** die Aussparungen (15; 25; 35; 55) einen Bodenabschnitt (18; 38; 58) aufweisen, der radial zum äusseren Umfang (19) des Schafts (12) beabstandet ist.

6. Schraube nach einem der Ansprüche 1 bis 5, **dadurch gekennzeichnet, dass** die Abstände (A) der Aussparungen (15) zueinander entlang des Verlaufs des Gewindes (14) vom setzungsrichtungsseitigen Ende (17) des Schafts (12) ausgehend sich vergrössern.

7. Schraube nach einem der Ansprüche 1 bis 6, **dadurch gekennzeichnet, dass** ein Positioniermittel (41; 61) in den Aussparungen (35; 55) zur Positionierung der Schneidmittel (36; 56) in den Aussparungen (35; 55) vorgesehen ist.

8. Schraube nach Anspruch 7, **dadurch gekennzeichnet, dass** das Positioniermittel (41) als ein Vorsprung (42) ausgebildet ist.

9. Schraube nach einem der Ansprüche 1 bis 8, **dadurch gekennzeichnet, dass** die Aussparungen (15; 25; 35; 55) Wandungen (39; 59, 60) aufweisen und die Schneidmittel (16; 26; 36; 56) zu zumindest einer der Wandungen (39; 59) beabstandet angeordnet sind.

10. Verfahren zum Herstellen einer Schraube (11; 21; 31; 51) nach einem der Ansprüche 1 bis 9, bei dem zunächst eine Schraube (11; 21; 31; 51) mit zumindest einem wenigstens bereichsweise umfänglich an einem Schaft (12) angeordneten Gewinde (14; 24; 34; 54) erstellt wird und anschliessend in dem Gewinde (14; 24; 34; 54) Aussparungen (15; 25; 35; 55) ausgenommen werden, **dadurch gekennzeichnet, dass** als Schneidmittel (16; 26; 36; 56) Schweissgut mittels Laserschweissen in den Aussparungen (15; 25; 35; 55) angeordnet wird.

## Claims

1. Self-tapping screw (11; 21; 31; 51), in particular self-tapping screw made from a corrosion-resistant metal, comprising a shaft (12) and at least one thread (14; 24; 34; 54) arranged at least partially circumferentially on said shaft (12), a plurality of cutting means (16; 26; 36; 56) being arranged on the thread (14; 24; 34; 54) in recesses (15; 25; 35; 55) in the thread (14; 24; 34; 54), the hardness of which cutting means (16; 26; 36; 56) is greater than the hardness of the thread (14; 24; 34; 54), **characterised in that** the cutting means (16; 26; 36; 56) are in the form of welded material arranged in the recesses (15; 25; 35; 55).

2. Screw according to Claim 1, **characterised in that** the welded material has a carbon content of less than 0.8 wt.%.

3. Screw according to Claim 1 or 2, **characterised in that** the recesses (25) for receiving the welded material are in the form of point recesses.

4. Screw according to Claim 1 or 2, **characterised in that** the recesses (15; 35; 55) for receiving the welded material are in the form of linear recesses.

5. Screw according to any one of claims 1 to 4, **characterised in that** the recesses (15; 25; 35; 55) have a base section (18; 38; 58) which is spaced radially from the outer periphery (19) of the shaft (12).

6. Screw according to any one of claims 1 to 5, **characterised in that** the distances (A) of the recesses (15) from one another increase along the extension of the thread (14), starting from the leading end (17) of the shaft (12) in the setting direction.

7. Screw according to any one of claims 1 to 6, **characterised in that** a positioning means (41; 61) is provided in the recesses (35; 55) for positioning the cutting means (36; 56) in the recesses (35; 55).

8. Screw according to Claim 7, **characterised in that** the positioning means (41) is in the form of a projection (42).

9. Screw according to any one of claims 1 to 8, **characterised in that** the recesses (15; 25; 35; 55) have walls (39; 59, 60) and the cutting means (16; 26; 36; 56) are arranged at a distance from at least one of the walls (39; 59).

10. Method for manufacturing a screw (11; 21; 31; 51) according to any one of claims 1 to 9, in which at least one screw (11; 21; 31; 51) is prepared with at least one thread (14; 24; 34; 54) arranged at least partially circumferentially on a shaft (12) and recesses (15; 25; 35; 55) are then formed in the thread (14; 24; 34; 54), **characterised in that** as cutting means (16; 26; 36; 56) welded material is arranged in the recesses (15; 25; 35; 55) by means of laser welding.

## Revendications

1. Vis autotaraudeuse (11 ; 21 ; 31 ; 51), en particulier vis autotaraudeuse en métal résistant à la corrosion, comprenant une tige (12) et au moins un filetage (14 ; 24 ; 34 ; 54) disposé sur celle-ci au moins en certains endroits de sa périphérie, plusieurs moyens de coupe (16 ; 26 ; 36 ; 56) étant disposés sur le filetage (14 ; 24 ; 34 ; 54) dans des évidements (15 ; 25 ; 35 ; 55) du filetage (14 ; 24 ; 34 ; 54) et leur dureté étant supérieure à celle du filetage (14 ; 24 ; 34 ; 54), **caractérisée en ce que** les moyens de coupe (16 ; 26 ; 36 ; 56) sont formés par du métal de soudure disposé dans les évidements (15 ; 25 ; 35 ; 55).

2. Vis selon la revendication 1, **caractérisée en ce que** le métal de soudure présente une teneur en carbone inférieure à 0,8 % en poids.

3. Vis selon la revendication 1 ou 2, **caractérisée en ce que** les évidements (25) sont conformés en évidements ponctuels pour recevoir le métal de soudure.

4. Vis selon la revendication 1 ou 2, **caractérisée en ce que** les évidements (15 ; 35 ; 55) sont conformés en évidements linéaires pour recevoir le métal de soudure.

5. Vis selon une des revendications 1 à 4, **caractérisée en ce que** les évidements (15 ; 25 ; 35 ; 55) comportent une portion de fond (18 ; 38 ; 58) qui est distante radialement de la périphérie extérieure (19) de la tige (12).

6. Vis selon une des revendications 1 à 5, **caractérisée en ce que** l'écartement (A) des évidements (15) le long du tracé du filetage (14) augmente à partir de l'extrémité côté direction de scellement (17) de la tige (12).

7. Vis selon une des revendications 1 à 6, **caractérisée en ce qu'**un moyen de positionnement (41 ; 61) est prévu dans les évidements (35 ; 55) pour positionner les moyens de coupe (36 ; 56) dans les évidements (35 ; 55) .

8. Vis selon la revendication 7, **caractérisée en ce que** le moyen de positionnement (41) est conformé en saillie (42).

9. Vis selon une des revendications 1 à 8, **caractérisée en ce que** les évidements (15 ; 25 ; 35 ; 55) comportent des parois (39 ; 59 ; 60), et les moyens de coupe (16 ; 26 ; 36 ; 56) sont disposés à distance d'au moins une des parois (39 ; 59).

10. Procédé de fabrication d'une vis (11 ; 21 ; 31 ; 51) selon une des revendications 1 à 9, dans lequel est d'abord réalisée une vis (11 ; 21 ; 31 ; 51) avec au moins un filetage (14 ; 24 ; 34 ; 54) disposé sur une tige (12) au moins en certains endroits de sa périphérie, et des évidements (15 ; 25 ; 35 ; 55) sont ensuite ménagés dans le filetage (14 ; 24 ; 34 ; 54), **caractérisé en ce que**, comme moyen de coupe (16 ; 26 ; 36 ; 56), du métal de soudure est disposé dans les évidements (15 ; 25 ; 35 ; 55) par soudage au laser.
